Europäisches Patentamt

European Patent Office

Office européen des brevets

(11) Publication number: **0 147 924**
**B1**

(12) **EUROPEAN PATENT SPECIFICATION**

(45) Date of publication of patent specification: **31.05.89**

(21) Application number: **84306750.5**

(22) Date of filing: **04.10.84**

(51) Int. Cl.⁴: **B 01 L 3/00,** B 65 D 45/02,
F 16 K 5/02, F 16 L 19/02,
F 16 L 49/00

(54) **Device for locking interengaged laboratory equipment members.**

(30) Priority: **31.10.83 US 547048**

(43) Date of publication of application:
**10.07.85 Bulletin 85/28**

(45) Publication of the grant of the patent:
**31.05.89 Bulletin 89/22**

(84) Designated Contracting States:
**DE FR GB IT**

(56) References cited:
**GB-A- 719 536**
**US-A-3 012 581**
**US-A-3 515 415**
**US-A-4 395 382**

(73) Proprietor: **Miskinis, Robert Joseph**
**10020 Prospect Avenue A 15**
**Santee California 92071 (US)**

(72) Inventor: **Miskinis, Robert Joseph**
**10020 Prospect Avenue A 15**
**Santee California 92071 (US)**

(74) Representative: **MacGregor, Gordon et al**
**ERIC POTTER & CLARKSON 14 Oxford Street**
**Nottingham, NG1 5BP (GB)**

Courier Press, Leamington Spa, England.

EP 0 147 924 B1

## Description

This invention relates to laboratory devices, such as an adaptor or stopcock having interengageable male and female members.

There is a frequent need in laboratories to be able to lock a male member to a female member, such as an adapter within a flask, especially when the flask contains a pressurized fluid, and there is a danger of accidental separation. A similar requirement exists for locking a stopcock in a selected position within its glassware housing. In the past, this problem was handled by merely forcing the members together with their complementary surfaces in engagement and hoping they would stay seated in sealing contact until their intentional separation. Unfortunately, many experiments have been aborted because the male member could not be positively locked in seated relation within the female member, or the male member could not be safely removed from the female member because the members were stuck or frozen together.

This problem was partially addressed to in US—A—4,391,779 and US—A—4,395,382, which patents disclose a retractor nut for removing a frozen stopper member and stopcock member from their respective female members. However, these patents did not discuss this problem of locking the members together, nor disclose any means for positively locking together the seated members together under a pressurized environment. The pre-characterising clause of claim 1 is based on US—A—4 391 779 and the characterising clause of claim 1 defines the distinguishing features of the present invention, which permit positive locking together of the male and female members.

This invention uniquely utilizes the existing outwardly projecting peripheral lip conventionally formed around the neck of most female glassware members on the market during fabrication. Accordingly the invention contemplates a laboratory device comprising a male member with a tapered surface for mating with a complementary tapered surface of a female member having an outwardly projecting annular rim around its opening and a threaded portion extending from one end of the tapered portion of said male member, the device including a collar screw engaged with the threaded portion of the male member and providing a shoulder to engage the rim of said female member, characterised in that the collar is provided with an inwardly projecting flange spaced from said shoulder to engage the opposite side of the rim. A sleeve-end of the screw engaged collar or nut is slotted along its wall a sufficient width to enable the nut to be mounted around, and detached from, the neck of the female member from a lateral position. The slot in the sleeve has a stepped configuration with the width of the larger slot gap being substantially the same diameter of the female lip to allow the lip to be press-fitted into the sleeve. The width of the smaller gap is smaller than the diameter of the female lip by an inwardly projecting lip which functions as one of the shoulders, and substantially the same size as the neck of the female member to allow lateral entry in the sleeve.

Accordingly, the sleeve nut can be laterally mounted around the neck of the female member with the shoulder formed by the stepped slot abutting the underside of the female lip and preventing longitudinal separation of the nut and the female lip. The end of the nut portion, opposite the sleeve lip, has a central opening which is threaded to receive an outwardly threaded portion formed on the male member. The threaded central opening is smaller in diameter than the bore diameter of the sleeve portion forming an inner transverse wall which forms the other shoulder for abutting against the topside of the female lip.

To lock the male member to the female member, the nut portion of the sleeve is rotated on the male member to move the nut away from the female tubing until one of the shoulders engages one side of the female lip to draw the members into a locked, tight sealed engagement. To separate the male and female members, especially when stuck or frozen together, the nut is rotated on the male member in the opposite direction until the other shoulder in the sleeve portion engages the other side of the female lip and the rotational force is converted into an axial force on the male member pulling it free from the engagement within the female member without danger of breakage of either member.

US—A—3 012 581, published in 1961 relates to the remote art pipe coupling systems for valves in which there is a problem of substantial disassembly usually being necessary to separate male and female members of the system, so as to permit relative rotation of the members. To avoid this problem, US—A—3 012 581 provides a threaded collar having a shoulder for engaging a flange on one of the members, to allow the collar to be screwed onto the other member to lock the members together.

Reference is now made to the accompanying drawings, in which:—

Figure 1 is a side elevation view of an assembled frusto-conical female member, such as the neck of a laboratory flask, mated to a corresponding male member, such as a laboratory adapter, on which is mounted a dual locking and retracting sleeve nut (or collar) according to this invention;

Figure 2 is an exploded view of the assembly of Figure 1, with the sleeve nut rotated 90 degrees from the position in Figure 1;

Figure 3 is a bottom perspective view of the sleeve nut;

Figure 4 is a partial enlarged cross-sectional view of the assembly in Figure 1 showing the sleeve nut in position locking the male and female members together;

Figure 5 is a similar view of Figure 4 showing the sleeve nut in a position retracting the male member from within the female member;

Figure 6 is a side elevation view of a modified dual locking and retracting sleeve nut mounted on a conventional stopcock assembly, showing the sleeve nut in cross-section, in a position locking the stopcock in a selected position; and

Figure 7 is a similar view as Figure 6 with a side view of the sleeve nut is shown in a position to retract the stopcock from its housing.

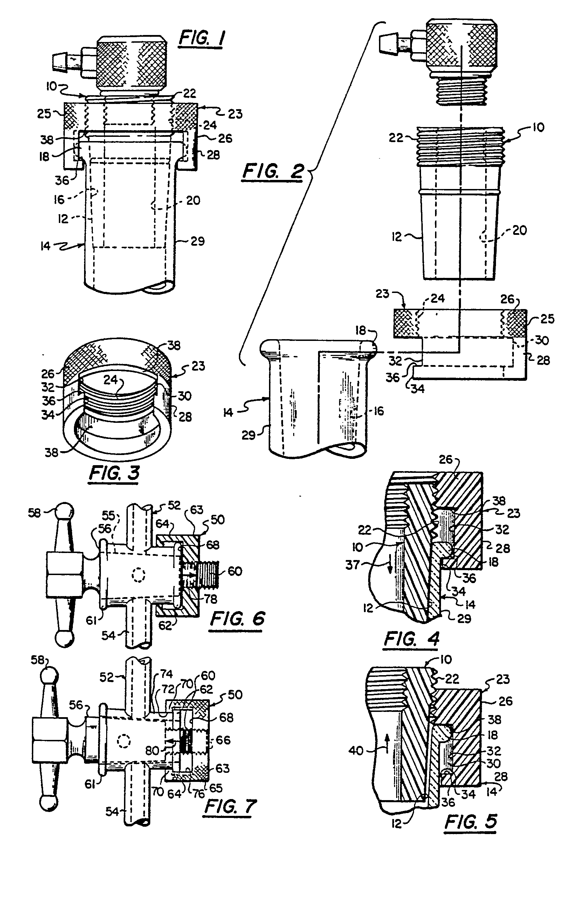

Referring to the drawing where like reference numerals refer to similar parts throughout the Figures, there is shown in Figure 1 an assembly of a male member, such as a laboratory adapter 10, having a frusto-conical male surface 12 at one end seated in a female member, such as a laboratory flask neck 14, having a complementary female frusto-conical surface 16. Surfaces 12 and 16 can be smooth or ground, although the latter surface is usually preferred. This invention is applicable to female members fabricated with an outwardly extending peripheral lip 18 around the female end surface being conventional in the laboratory art. The male member can be a solid stopper type member, or as shown in Figure 1 an adapter type stopper 10 having a longitudinally drilled bore opening through which a vacuum or pressure can be introduced in flask 14, or as shown in Figures 6 and 7, a stopcock type stopper, or any other conventional male and female mated tubing.

The other end of adapter 10 is fabricated with an exterior threaded section 22 on which can be threadedly mounted a locking and retracting sleeve nut 23 having a threaded bore opening 24 at one end to receive male threads 22, as best shown in Figure 3. Sleeve nut 23 is preferably made of plastic material with its outer peripheral surface knurled at 25. The end of sleeve nut containing threads 24 functions as a nut portion 26, and the other integral end is an integral sleeve portion 28 for receiving both lip 18 and neck 29 of flask 14 in a manner to be described. Threaded bore 24 of nut portion 26 is smaller in diameter than the diameter of sleeve bore 30 forming an annular transverse wall which acts as a shoulder 38. The end of sleeve portion 28, opposite to nut portion 26, terminates in an inwardly directed annular lip forming a flange spaced from shoulder 38. Flange 36 forms a central opening 34 which is larger in diameter than flask neck 29, but smaller in diameter than flask lip 18. The diameter of sleeve bore 30 is larger than the diameter of flask lip 18. A portion of the wall of sleeve portion 28 is longitudinally slotted at 32 in a stepped configuration having a width capable of allowing the lateral passage of both flask lip 18 and neck 29 through the respective slotted openings into longitudinal alignment within sleeve portion 28. The width of stepped slot 32 is preferably dimensioned so that both the lip and the neck of the flask can be snap-fitted therethrough, relying on the resiliency of the plastic material to retain the sleeve nut 23 in position on the flask until intentional removal.

The operation of the adapter-type assembly of Figures 1—5 is best illustrated in Figures 4 and 5. Sleeve nut 23 is first slipped on the flask neck from a lateral direction with flask lip 18 and neck 29 passing through the stepped slot 32 to be longitudinally aligned therewith. In this position, flask lip 18 is longitudinally confined between spaced flange 36 and shoulder 38. Adapter 10 is then longitudinally threaded through sleeve nut 23, in the direction of arrow 37 in Figure 4, until surfaces 12 and 16 initially engage. To tightly lock the adapter within the flask, sleeve nut 23 is rotated on the adapter in a direction away from flask 14 until flange 36 abuts the underside of lip 18 and the sleeve nut is not longer turntable.

When it becomes necessary to separate adapter 10 from flask 14 and break the seal between the frusto-conical surfaces, sleeve nut 23 is rotated in an opposite direction, namely toward flask 14, until shoulder 38 first contacts the top side of flask lip 18, as in Figure 5. A slight additional rotational force on nut 23 in the same direction applies an axial retracting force on the adapter, in the direction of arrow 40 in Figure 5, to break the seal between the surfaces and free the adapter from the flask. To disassemble the members it is first necessary to remove adapter 10 completely out of sleeve nut 23 at which time the nut can be slipped off flask 14 in a lateral direction, as in Figure 2.

Figures 6 and 7 illustrate the application of the novel sleeve nut 50 to a typical stopcock assembly 52, which is another type of female member on which the the invention can be employed. Assembly 52 consists of a housing 54 having a tapered bore 55 in which is sealably a corresponding tapered stopcock body 56 provided with a handle 58 at the larger diameter end, and a threaded stud portion 60 at the smaller diameter end. An inherent characteristic of all stopcock housing is the peripheral lips 61 and 62 at the opposite ends of tapered bore 55.

Sleeve nut 50 is similar in construction to sleeve nut 23 in Figures 1—5 consisting of a nut portion 63 and an integral sleeve portion 64, the outer surfaces may be knurled at 65. Nut portion 63 has a central threaded opening 66 to receive threaded stud 60 of the stopcock body, and an inner transverse shoulder 68 adapted to abut the end of lip 62 of the stopcock housing. The end of sleeve portion 64 terminates in an inwardly projecting annular flange 70 forming a central opening 72 the diameter of which is slightly larger than the diameter of the stopcock housing adjacent to its lip 62, but less in diameter than lip 62. A portion of the side wall of sleeve portion 64 is slotted at 76 at a sufficient width to allow passage therethrough lip 62 and the neck of the housing, preferably in a snap-fitting contact to enable lip 62 to be captured between 68 and 70.

The operation of sleeve nut 50 is similar to that described for the adapter assembly 10 in Figures 1—5, with the exception that the direction of rotation of sleeve nut 50 is reversed for the locking and retracting operation. Stopcock body 56 is pulled into its housing 54 to be seated, see arrow 78 in Figure 6, rather than the pushing force required in the adapter assembly in Figures 1—5. Likewise, stopcock body 56 is pushed out of its housing, see arrow 80 in Figure 7, during the retraction operation rather than being pulled out in Figures 1—5.

The novel sleeve nuts 23 and 50 of this invention utilize the conventional structure of laboratory wares which are fabricated with peripheral lips around their female openings, to perform a dual function, namely of both locking the male member within the female member, which is of significant importance if the male member is subject to a pressurized medium within the female member; and of enabling the male member to be withdrawn from the female member, when desired, in a safe and expedient manner, especially when the members are stuck or frozen together. The sleeve nuts can be inexpensively fabricated of plastic material in a single piece construction, and be designed to snap-fit around the female member and be captured thereon to prevent accidental displacement.

**Claims**

1. A laboratory device comprising a male member (10, 56) with a tapered surface for mating with a complementary tapered surface (12) of a female member (14, 54) having an outwardly projecting annular rim around its opening and a threaded portion extending from one end of the tapered portion of said male member, the device including a collar (23, 50) screw engaged with the threaded portion of the male member and providing a shoulder (38, 68) to engage the rim of said female member, characterised in that the collar is provided with an inwardly projecting flange (36, 70) spaced from said shoulder to engage the opposite side of the rim.

2. A laboratory device according to Claim 1, wherein the collar (23) has a first bore portion carrying a screw thread (24), a second bore portion (30) of greater diameter spacing a third bore portion (34) from the first bore portion, the bore portion defining said shoulder (38, 68) between the first and second bore portions and said flange (36, 70) between the second and third bore portions.

3. A laboratory device according to Claim 2, in combination with said female member (14, 54), wherein a slot (32) is formed in the wall of the second and third bore portions having a width permitting passage therethrough of the open end and lip (18) of the female member.

4. A laboratory device according to Claim 3, in combination with said female member (14, 54), wherein the collar is made of resilient material and the slot (32) is smaller in width than the open end of the female member to allow snap-fitting of the collar onto the open end of the female member.

5. A laboratory device according to any preceding claim in combination with said female member (14, 54) wherein the female member is made of glass.

6. A laboratory device according to Claim 5, wherein the collar (23, 50) is made of plastics material.

7. A laboratory assembly comprising a female member (14) and a laboratory device according to any preceding claim including an axial bore through the male member (10) for application of a vacuum or pressure to the female member.

8. A laboratory assembly including a device according to Claim 2, 3 or 4 and a female member (14) having an outwardly projecting annular lip (18), the axial length of the second bore portion (30) being substantially greater than the axial depth of the lip.

9. A laboratory stopcock assembly (52) comprising a female member (54) and a laboratory device according to any one of Claims 1 to 6, having a male member (56) in the form of a stopcock body extending completely through the bore (55) of the female member, a handle (58) at one end of the male member and a screw-threaded stud (60) at the opposite end thereof, the collar being screw-engaged with the threaded stud.

**Patentansprüche**

1. Laboratoriumsvorrichtung, umfassend ein Einsteck- oder Innenelement (10, 56) mit einer sich verjüngenden oder konischen Fläche für Passung mit einer komplementären konischen Fläche (12) eines Aufnahme- oder Außenelements (14, 54), das einen nach außen ragenden Ringbund um seine Öffnung herum aufweist, und einem vom einen Ende des konischen Abschnitts des Innenelements abgehenden Gewindeabschnitt, wobei die Vorrichtung eine auf den Gewindeabschnitt des Innenelements aufgeschraubte Manschette (23, 50) aufweist, die eine am Ringbund des Außenelements anliegende Schulter (38, 68) festlegt, dadurch gekennzeichnet, daß die Manschette mit einem von der Schulter beabstandeten, einwärts ragenden Flansch (36, 70), der an der gegenüberliegenden Seite des Ringbunds angreift, versehen ist.

2. Laboratoriumsvorrichtung nach Anspruch 1, dadurch gekennzeichnet, daß die Manschette (23) einen mit einem Schraubgewinde (24) versehenen ersten Bohrungsabschnitt, (und) einen einen größeren Durchmesser aufweisenden zweiten Bohrungsabschnitt (3), der einen dritten Bohrungsabschnitt (34) mit einem Abstand vom ersten Bohrungsabschnitt trennt, aufweist und die Bohrungsabschnitte die Schulter (38, 68) zwischen erstem und zweitem Bohrungsabschnitt sowie den Flansch (36, 70) zwischen zweitem und drittem Bohrungsabschnitt festlegen.

3. Laboratoriumsvorrichtung nach Anspruch 2, in Kombination mit dem Aufnahme- oder Außenelement (14, 54), dadurch gekennzeichnet, daß in der Wand von zweitem und drittem Bohrungsabschnitt ein Schlitz (32) einer Breite, die ein Hindurchtreten des offenen Endes und einer Lippe (18) des Außenelements gestattet, ausgebildet ist.

4. Laboratoriumsvorrichtung nach Anspruch 3, in Kombination mit dem Aufnahme- oder Außenelement (14, 54), dadurch gekennzeichnet, daß die Manschette aus einem elastischen Werkstoff geformt ist und der Schlitz (32) eine kleinere Breite oder Weite als das offene Ende des Außenelements aufweist, um ein Aufrasten (mit Schnappsitz) der Manschette auf das offene Ende des Außenelements zu erlauben.

5. Laboratoriumsvorrichtung nach einem der vorangehenden Ansprüche, in Kombination mit dem Aufnahme- oder Außenelement (14, 54), dadurch gekennzeichnet, daß das Außenelement aus Glas geformt ist.

6. Laboratoriumsvorrichtung nach Anspruch 5, dadurch gekennzeichnet, daß die Manschette (23, 50) aus Kunststoff geformt ist.

7. Laboratoriumsanordnung aus einem Aufnahme- oder Außenelement (14) und einer Laboratoriumsvorrichtung nach einem der vorangehenden Ansprüche, mit einer das Innenelement (10) durchsetzenden Axialbohrung für die Beaufschlagung des Außenelements mit einem Unterdruck oder einem (positiven) Druck.

8. Laboratoriumsanordnung mit einer Vorrichtung nach Anspruch 2, 3 oder 4 und einem Aufnahme- oder Außenelement (14) mit einer nach außen ragenden, ringförmig umlaufenden Lippe (18), wobei die axiale Länge des zweiten Bohrungsabschnitts (30) wesentlich größer ist als die axiale Tiefe der Lippe.

9. Laboratoriums-Absperrhahnanordnung (52), umfassend ein Aufnahme- oder Außenelement (54) und eine Laboratoriumsvorrichtung nach einem der Ansprüche 1 bis 6, mit einem Einsteck- oder Innenelement (56) in Form eines sich vollständig durch die Bohrung (55) des Außenelements erstreckenden Absperrhahnkörpers, einem am einen Ende des Innenelements vorgesehenen Handgriff (58) und einem an seinem anderen Ende angeordneten, mit Gewinde versehenen Stutzen (60), auf den die Manschette aufgeschraubt ist.

**Revendications**

1. Dispositif de laboratoire comprenant un élément mâle (10, 56) avec une surface conique pour épouser une surface conique complémentaire d'un élément femelle (14, 54) ayant un rebord annulaire en saillie vers l'extérieur autour de son ouverture, et une portion filetée s'étendant à partir d'une extrémité de la partie conique dudit élément mâle, ce dispositif comprenant un collier (23, 50) se vissant sur la partie filetée de l'élément mâle et présentant un épaulement (38, 68) pour s'engager contre le rebord dudit élément femelle, caractérisé en ce que le collier est muni d'une collerette (36, 70) en saillie vers l'intérieur, espacée par rapport audit épaulement, pour s'engager contre l'autre côté du rebord.

2. Dispositif de laboratoire selon la revendication 1, dans lequel le collier (23) a une première partie alésée portant un filetage (24), une deuxième partie alésée (30) de plus grand diamètre formant un espacement entre une troisième partie alésée (34) et la première partie alésée, les parties alésées délimitant ledit épaulement (38, 68) entre la première partie alésée et la deuxième partie alésée et ladite collerette (36, 70) entre la deuxième partie alésée et la troisième partie alésée.

3. Dispositif de laboratoire selon la revendication 2, en combinaison avec ledit élément femelle (14, 54), dans lequel une encoche (32) est formée dans la paroi de la deuxième partie alésée de la troisième partie alésée, ayant une largeur permettant d'y faire passer l'extrémité ouverte et la lèvre (18) de l'élément femelle.

4. Dispositif de laboratoire selon la revendication 3, en combinaison avec ledit élément femelle (14, 54), dans le quel le collier est fait d'un matériau élastique et l'encoche (32) est plus petite en largeur que l'extrémité ouverte de l'élément femelle pour permettre un serrage élastique du collier sur l'extrémité ouverte de l'élément femelle.

5. Dispositif de laboratoire selon l'une quelconque des revendications précédentes en combinaison avec ledit élément femelle (14, 54), dans lequel l'élément femelle est en verre.

6. Dispositif de laboratoire selon la revendication 5, dans lequel le collier (23, 50) est en matière plastique.

7. Ensemble de laboratoire comprenant un élément femelle (14) et un dispositif de laboratoire selon l'une quelconque des revendications précédentes, comportant un alésage axial traversant l'élément mâle (10) pour appliquer un vide ou une pression à l'élément femelle.

8. Ensemble de laboratoire comprenant un dispositif selon la revendication 2, 3 ou 4 et un élément femelle (14) ayant une lèvre annulaire (18) en saillie vers l'extérieur, la longueur axiale de la deuxième partie alésée (30) étant sensiblement plus grande que la profondeur axiale de la lèvre.

9. Ensemble de robinet de laboratoire (52) comprenant un élément femelle (54) et un dispositif de laboratoire selon l'une quelconque des revendications 1 à 6, ayant un élément mâle (56) sous la forme d'un boisseau de robinet s'étendant complètement à travers l'alésage (55) de l'élément femelle, un croisillon (58) sur une extrémité de l'élément mâle et un goujon fileté (60) sur l'autre extrémité de cet élément, le collier se vissant sur le goujon fileté.

EP 0 147 924 B1

FIG. 1

FIG. 2

FIG. 3

FIG. 4

FIG. 5

FIG. 6

FIG. 7

1